# EUROPEAN PATENT APPLICATION

(11) **EP 4 462 448 A1**
(43) Date of publication of application: **13.11.2024**
(21) Application number: 24731808.2
(22) Date of filing: 06.02.2024
(51) Int. Cl.: G21D 3/04, G21C 17/00, G06F 30/20, G06F 119/02

(54) **AUTOMATION SYSTEM AND AUTOMATION METHOD FOR NUCLEAR POWER PLANT ACCIDENT ANALYSIS**

(30) Priority: 31.03.2023 KR 20230042953
(71) Applicant: Korea Hydro & Nuclear Power Co., Ltd, Gyeongju-si, Gyeongsangbuk-do 38120 (KR)
(72) Inventor: HONG, Tae Hyub, Yuseong-gu Daejeon 34101 (KR)
(74) Representative: Taruttis, Tilman
(86) International application number: PCT/KR2024/001680
(87) International publication number: WO 2024/205009

(57) **Abstract**

An automation system for accident analysis of a nuclear power plant and an automation method thereof are provided. The automation method of accident analysis in a nuclear power plant includes loading primary input information including user input information and event tree information on accident scenario information for accident analysis in a primary input information generation module, generating accident scenario information of the nuclear power plant based on the primary input information in an accident scenario information generation module, generating secondary input information for accident analysis based on the accident scenario information in a secondary input information generation module, and generating accident analysis information by performing accident analysis for the nuclear power plant based on the secondary input information in an accident analysis execution module.

## Description

### Technical Field

The present invention relates to an automation system for accident analysis of a nuclear power plant and an automation method thereof.

### Background Art

Accident analysis of a nuclear power plant is an essential factor in the process of designing the nuclear power plant, changing the design and responding to the regulatory authority's licensing. Although accident analysis engineering experts have been performing accident analysis of nuclear power plants up to now, there are inefficient factors that require human intervention in the accident analysis process. In addition, as a computing power is improved and artificial intelligence and big data technologies are developed, automation is required for the entire process of accident analysis to maximize power generation and engineering efficiency.

In case of the technology using PSA's event trees, details of accident, which is selected for main systems in the nuclear power plant through event tree data, are analyzed through a thermal-hydraulic analysis (MAAP4) code, so that reliability of a success criteria of the system in the probabilistic safety evaluation may be evaluated, whereby the technology's aim is limited to providing an accurate basis for the analysis of core damage frequency. That is, there is limitation in achieving the purpose of automating accident analysis because an accident scenario to be analyzed is limited to a core damage accident scenario and an overall automation algorithm for accident analysis is not specifically explained. For example, the main inventive details were limited to the method of selecting a serious accident scenario using PSA event trees, and scenarios other than the selected scenario could not be considered. Therefore, there is limitation in achieving overall automation of accident analysis.

### Disclosure

### Technical Problem

An object of the present invention is to automate an entire process for all kinds of accident scenario information, which may occur in the nuclear power plant, based on information of PSA without the intervention of an analyst.

Another object of the present invention is to significantly reduce engineering costs for accident analysis, which are required by design and licensing of the nuclear power plant, PSA maintenance, etc.

Another object of the present invention is to improve understanding of nuclear power plant workers, such as operators and accident response personnel, for nuclear power plant accidents and strengthen accident response capabilities, by lowering barriers to entry into accident analysis fields that require high engineering knowledge, thereby contributing to improving nuclear power plant safety.

Another object of the present invention is to allow a large amount of data on a behavior of a nuclear power plant in an entire accident scenario related to the nuclear power plant to be easily used in the field of artificial intelligence for nuclear power plant training or accident response because the large amount of data can be obtained in a short period of time.

The objects of the present invention are not limited to those mentioned above and additional objects of the present invention, which are not mentioned herein, will be clearly understood by those skilled in the art from the following description of the present invention.

### Technical Solutions

An automation method for accident analysis of a nuclear power plant according to one aspect of the present invention to achieve the above objects comprises loading primary input information including user input information and event tree information on accident scenario information for accident analysis in a primary input information generation module, generating accident scenario information of the nuclear power plant based on the primary input information in an accident scenario information generation module, generating secondary input information for accident analysis based on the accident scenario information in a secondary input information generation module, and generating accident analysis information by performing accident analysis for the nuclear power plant based on the secondary input information in an accident analysis execution module.

Also, the automation method further comprises generating result report information according to the accident analysis of the nuclear power plant based on the accident analysis information in a result report generation module.

Also, the accident scenario information includes at least 1,000 to 100,000 accident scenarios for each type.

Also, the accident scenario information generation module includes an element facility failure information generator generating first element facility failure information according to occurrence of a first element facility failure among element facilities of the nuclear power plant based on the primary input information, and second element facility failure information according to a second element facility failure among the element facilities of the nuclear power plant based on the primary input information.

Also, the element facility includes at least one of a pump, a valve, a pipe, an air conditioning device or an electric device of the nuclear power plant.

Also, the accident scenario information generation module further includes a safety system failure information generator generating safety system failure information on whether an operation of a safety system of the nuclear power plant corresponding to the element facility is failed, based on the element facility failure information.

Also, the safety system includes a first safety system in which the first element facility is included, and a second safety system in which the second element equipment is included, and the safety system failure information includes first safety system failure information related to the first safety system, and second safety system failure information related to the second safety system.

Also, the secondary input information generation module generates accident analysis input information based on the safety system failure information, and the secondary input information is generated based on the accident analysis input information.

Also, the generating accident scenario information includes a (1-3)th step of loading (n)th accident scenario information, which is accident scenario information of an (n)th round, among the accident scenario information, a (1-4)th step of selecting (n)th history information from history information based on the (n)th accident scenario information, a (1-5)th step of obtaining (n)th safety system failure information from the safety system failure information in response to selected first history information, a (1-6)th step of determining whether a round of the (n)th history information is a final round, in response to the (n)th safety system failure information, and a (1-7)th step of adding the round of the (n)th history information to enter the (1-5)th step when it is determined in the (1-6)th step that the round of the (n)th history information is not a final round.

Also, the automation method comprises a (1-9)th step of determining whether the round of the (n)th accident scenario information is the final round, and a (1-10)th step of generating the accident scenario information when the round is the final round.

Also, the automation method further comprises a (1-9)th step of adding the round of the (n)th accident scenario information corresponding to the (n)th history information when it is determined in the (1-6)th step that the round of the (n)th history information is the final round.

Also, the automation method further comprises a (1-7)th step of entering the (1-5)th step based on the added round of the (n)th history information when the round of the (n)th history information in the (1-6)th step is not the final round.

Also, the corresponding step enters the (1-3)th step when it is determined in the (1-9)th step that the round of the (n)th accident scenario information is not the final round.

Also, the automation method further comprises a (1-1)th step of generating history information analysis information through analysis of the event tree information, and a (1-2)th step of storing the analysis information through the analysis of the event tree information in a DB, wherein the (n)th safety system failure information in the (1-5)th step is provided from the DB.

Also, the generating secondary input information includes a (2-1)th step of loading the scenario information, a (2-3)th step of loading (n)th accident scenario information, which is accident scenario information of an (n)th round, among the accident scenario information, a (2-4)th step of selecting (n)th history information from the history information based on the (n)th accident scenario information, a (2-5)th step of obtaining and loading (n)th computing code input information corresponding to the selected (n)th history information, a (2-6)th step of determining whether a round of the (n)th history information in the (2-4)th step is a final round, a (2-8)th step of generating user input variable reflection information based on the user input information and the (n)th computing code input information when it is determined in the (2-6)th step that the round of the (n)th history information is the final round, a (2-9)th step of generating variable reflection (n)th computing code input statement information, which is a computing code input statement based on the (n)th accident scenario information, based on the user input variable reflection information, a (2-10)th step of determining whether the round of the (n)th accident scenario information in the (2-9)th step is the final round, and a (2-12)th step of generating the secondary input information including the (n)th computing code input statement information when the round is the final round.

Also, the automation method further comprises a (2-11)th step of adding the round of the (n)th accident scenario information to enter the (2-3)th step when the round of the (n)th accident scenario information is not the final round in the (2-10)th step.

An automation system for accident analysis of a nuclear power plant according to another aspect of the present invention to achieve the above objects comprises a primary input generation module generating primary input information for accident analysis, a scenario information generation module generating accident scenario information of the nuclear power plant based on the primary input information, a secondary input information generation module generating secondary input information for accident analysis based on the accident scenario information, and an accident analysis execution module generating accident analysis information by performing accident analysis for the nuclear power plant based on the secondary input information.

### Advantageous Effects

According to the present invention as above, one or more advantageous effects may be obtained as follows.

According to the present invention, an entire process for all kinds of accident scenario information, which may occur in a nuclear power plant, may be automated based on information of PSA without the intervention of an analyst.

Also, engineering costs for accident analysis required by design and licensing of the nuclear power plant and PSA maintenance may be significantly reduced.

Also, barriers to entry into accident analysis fields that require high engineering knowledge may be lowered to improve understanding of nuclear power plant workers, such as operators and accident response personnel, for nuclear power plant accidents and strengthen accident response capabilities, thereby contributing to improving nuclear power plant safety.

Also, a large amount of data on a behavior of a nuclear power plant in an entire accident scenario related to the nuclear power plant can be obtained in a short period of time, and thus may be easily used in the field of artificial intelligence for nuclear power plant training or accident response.

### Brief Description of the Drawings

FIG. 1 is a block diagram illustrating an automation system for accident analysis of a nuclear power plant according to one embodiment of the present invention.
FIG. 2 is a block diagram illustrating the configuration of FIG. 1.
FIG. 3 is a detailed block diagram illustrating the configuration of FIG. 2.
FIG. 4 is a detailed block diagram illustrating the configuration of FIG. 2.
FIG. 5 is a flow chart sequentially illustrating an automation method for accident analysis of a nuclear power plant according to one embodiment of the present invention.
FIG. 6 is a flow chart sequentially illustrating some processes according to FIG. 5.

### Best Mode for Carrying Out the Invention

An automation method for accident analysis of a nuclear power plant comprises loading primary input information including user input information and event tree information on accident scenario information for accident analysis in a primary input information generation module, generating accident scenario information of the nuclear power plant based on the primary input information in an accident scenario information generation module, generating secondary input information for accident analysis based on the accident scenario information in a secondary input information generation module, and generating accident analysis information by performing accident analysis for the nuclear power plant based on the secondary input information in an accident analysis execution module.

### Mode for Carrying Out the Invention

Hereinafter, the preferred embodiments of the present invention will be described in detail with reference to the accompanying drawings. Advantages and features of the present invention and methods of achieving the advantages and features will be apparent from the following embodiments that will be described in detail with reference to the accompanying drawings. The present invention may, however, be embodied in various forms, and should not be construed as being limited to the embodiments set forth herein. Rather, these embodiments are provided so that the present invention will be thorough and complete, and will fully convey the scope of the present invention to those skilled in the art. Further, the present invention is only defined by the scope of the claims. Throughout the specification, the same reference numerals refer to the same elements.

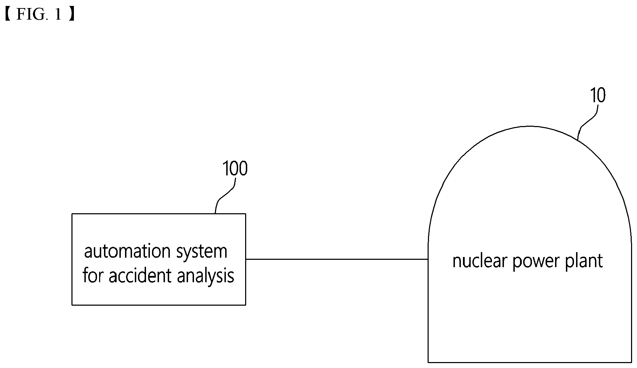

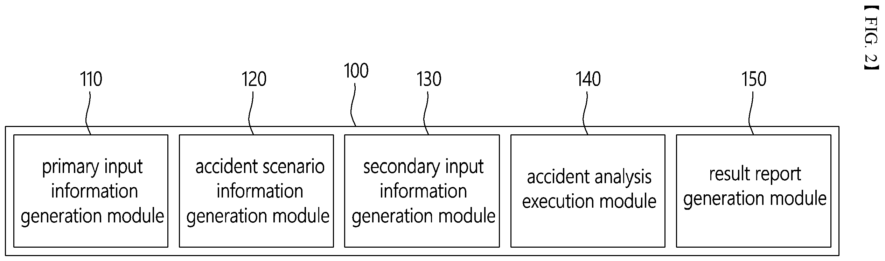

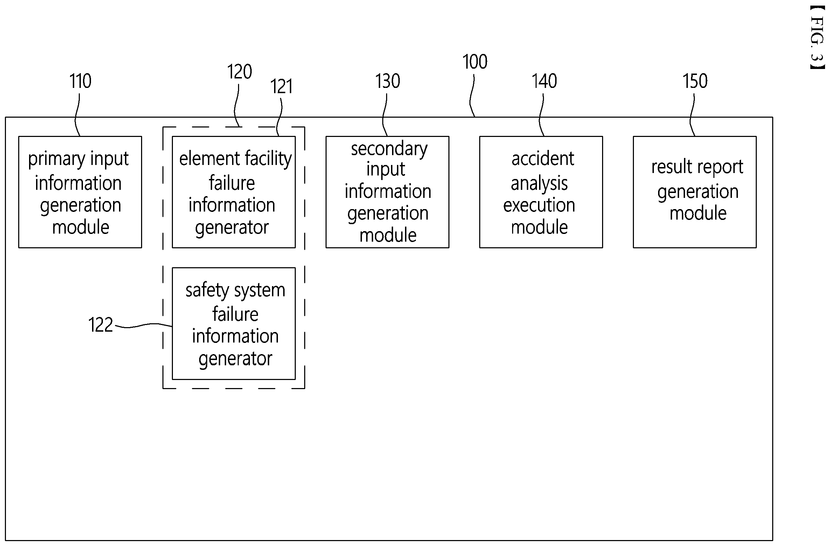

Referring to FIGS. 1 to 2, an automation system 100 (hereinafter, referred to as "system 100") for accident analysis of a nuclear power plant according to one embodiment of the present invention includes a primary input information generation module 110, an accident scenario information generation module 120, a secondary input information generation module 130, an accident analysis execution module 140 and a result report generation module 150. The secondary input information generation module 130 includes an element facility failure information generator 121 and a safety system failure information generator 122. (See FIG. 3).

Referring to FIG. 3, the primary input information generation module 110 of the system 100 generates primary input information for accident analysis. The accident scenario information generation module 120 of the system 100 generates accident scenario information of the nuclear power plant based on the primary input information.

The secondary input information generation module 120 of the system 100 generates secondary input information for accident analysis based on the accident scenario information. The accident analysis execution module 140 of the system 100 generates accident analysis information by performing accident analysis for the nuclear power plant based on the secondary input information.

In addition, the result report generation module 150 of the system 100 generates result report information according to accident analysis of the nuclear power plant based on the accident analysis information. The accident scenario information includes at least 1,000 to 100,000 accident scenarios for each type.

The accident scenario information generation module 120 generates first element facility failure information, second element facility failure information and (n)th element facility failure information based on the primary input information. The first element facility failure information relates to occurrence of a first element facility failure among element facilities of the nuclear power plant based on the primary input information.

Meanwhile, the second element facility failure information relates to a second element facility failure among the element facilities of the nuclear power plant based on the primary input information. The element facility includes at least one of a pump, a valve, a pipe, an air conditioning device or an electric device of the nuclear power plant.

The safety system failure information generator 122 of the accident scenario information generation module 120 generates safety system failure information on whether a safety system of the nuclear power plant corresponding to the element facility fails, based on the element facility failure information.

The safety system includes a first safety system in which a first element facility is included, a second safety system in which a second element facility is included, and an (n)th safety system in which an (n)th element facility is included. The safety system failure information includes first safety system failure information on the first safety system, second safety system failure information on the second safety system and (n)th safety system failure information on the (n)th safety system.

In addition, the secondary input information generation module 130 generates accident analysis input information based on the safety system failure information. In this case, the secondary input information is generated based on the accident analysis input information.

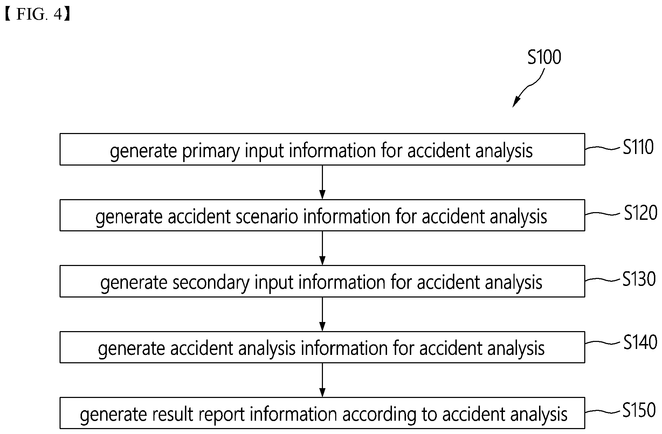

Referring to FIG. 4, in an automation method (S100) for accident analysis of a nuclear power plant according to one embodiment of the present invention, the primary input information generation module 110 loads the primary input information including user input information and event tree information on accident scenario information for accident analysis.

In addition, the accident scenario information generation module 120 generates accident scenario information of the nuclear power plant based on the primary input information. The secondary input information generation module 130 generates the secondary input information for accident analysis based on the accident scenario information.

The accident analysis module 140 performs accident analysis for the nuclear power plant based on the secondary input information to generate accident analysis information. The result report generation module 150 generates result report information according to the accident analysis of the nuclear power plant based on the accident analysis information.

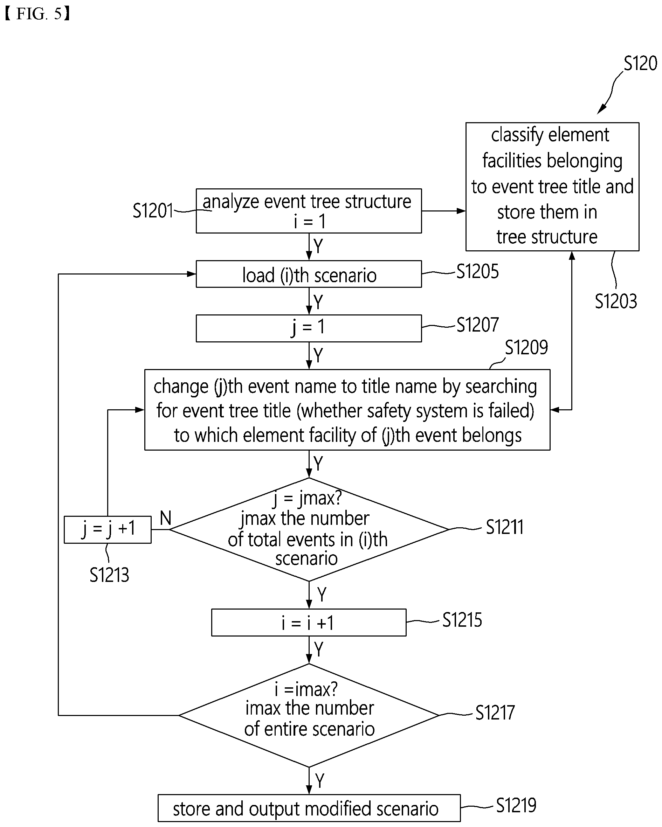

Referring to FIG. 5, in (1-1)th step(S1201) of step (S120) of generating the accident scenario information, through the analysis of the event tree information, history information indicating each accident scenario and including an initial event, first element facility failure information, second element facility failure information and (max)th element facility failure information is generated, and safety system failure information to which each element facility failure information belongs is determined.

Meanwhile, history information analysis information is generated through analysis. In (1-2)th step (S1203), the analysis information through the analysis of the event tree information is stored in a DB. In (1-3)th step (S1205), (n)th accident scenario information, which is accident scenario information of an (n)th round, among the accident scenario information, is loaded.

In (1-4)th step (S1207), the (n)th history information based on the (n)th accident scenario information is selected. In this case, the selection is performed from a first round to the (max)th round.

The (n)th history information includes information on an initial event that has occurred in the nuclear power plant and element facilities #1 to #max in which a failure occurs after the initial event. When the failure of the element facility #1 occurs, the element facility #2 responds to the failure of the element facility #1. When the element facility #2 fails, the element facility #3 operates in a form corresponding to the failure of the element facility #2.

In addition, in relation to the shown j, for example, j=1 refers to an initial event that has occurred in the nuclear power plant, j=2 refers to the element facility #1 in which the failure has occurred after the initial event, and j=3 refers to another element facility #2 in which the failure has occurred after the initial event.

That is, j=1 to j=n sequentially refer to the initial event and the element facilities #1 to #max in which a failure occurs after the initial event. Based on this, element facility failure information on the failure of the element facility is generated.

(n)th safety system failure information is obtained in response to the (n)th history information or the element facility failure information, which is selected in (1-5)th step (S1209). The (n)th safety system failure information relates to a plurality of safety systems that include the element facility, and relates to safety systems that include failed element facility.

That is, the (n)th safety system failure information includes the first safety system failure information on the first safety system to the (max)th safety system failure information on the (max)th safety system. In this case, the (n)th accident scenario information is processed to include at least a portion of name information of the failed safety system that includes the failed element facility. In the (1-5)th step (S1209), the (n)th safety system failure information is provided from the DB.

In (1-6)th step (S1211), it is determined whether a round of the (n)th history information included in the (n)th accident scenario information has reached a final round. In (1-7)th step (S1213), when it is determined that the round of the (n)th history information is not the final round in in the (1-6)th step (S1211), the round of the (n)th history information is added to enter the (1-5)th step (S1209).

In addition, the round of the (n)th accident scenario information is added in (1-8)th step (S1215). In (1-9)th step (S1217), it is determined whether the round of the (n)th accident scenario information is the final round.

In the (1-9)th step (S1217), when it is determined in the (1-6)th step (S1211) that the round of the (n)th history information is the final round, the round of the (n)th accident scenario information corresponding to the (n)th history information is added.

In this case, the addition sequentially proceeds to reach a preset final round in the order of the (n)th round, (n+1)th round, (n+2)th round and so on.

In (1-10)th step (S1219), when the round is the final round, the accident scenario information is generated. Meanwhile, when it is determined in the (1-9)th step (S1217) that the above round of the (n)th accident scenario information is not the final round, the step enters the (1-3)th step (S1205).

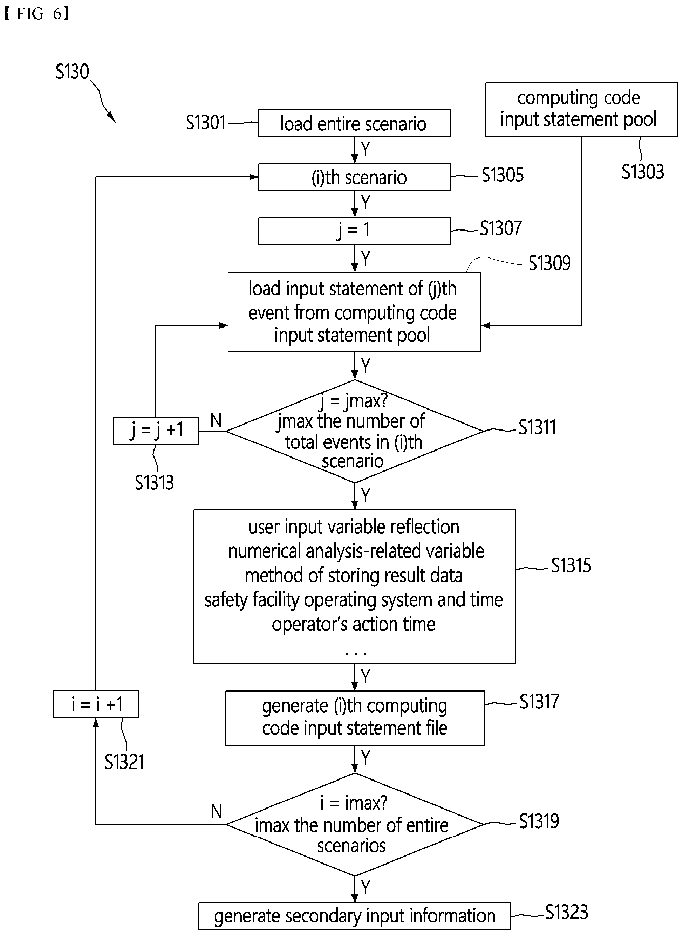

Referring to FIG. 6, in generating the secondary input information (S130), the scenario information for accident analysis passing through the (1-1) step (S1201) to the (1-10)th step (S1219) is loaded in (2-1)th step (S1301).

In (2-2)th step (S1303), (n)th computing code input information is stored in the form of a pool so that the (n)th computing code input information may be provided in (2-5)th step (S1309) that will be described later. In (2-3)th step (S1305), the (n)th accident scenario information, which is the accident scenario information of the (n)th round among the accident scenario information, is loaded.

In (2-4)th step (S1307), the (n)th history information of the history information is selected based on the (n)th accident scenario information. In the (2-5)th step (S1309), (n)th computing code input information corresponding to the selected (n)th history information is obtained and loaded. In (2-6)th step (S1311), it is determined whether the round of the (n)th history information in the (2-5)th step (S1309) is the final round.

In addition, in (2-7)th step (S1313), when it is determined in the (2-6)th step (S1311) that the round of the (n)th history information is not the final round, the round of the (n)th history information is added to enter the (2-5)th step (S1309).

In (2-8)th step (S1313), when it is determined in the (2-6)th step (S1311) that the round of the (n)th history information is the final round, user input variable reflection information is generated based on the user input information and the (n)th computing code input information.

In this case, the user input variable reflected in the user input variable reflection information includes information on at least one of a numerical analysis-related variable related to an object on the nuclear power plant, a method of storing result data, safety facility operating system, safety facility operating time or an operator's action time.

In (2-9)th step (S1317), variable reflection (n)th computing code input statement information, which is a computing code input statement based on the (n)th accident scenario information, is generated based on the user input variable reflection information.

In addition, in (2-10)th step (S1319), it is determined whether the round of the (n)th accident scenario information in the (2-9)th step (S1317) is the final round. In (2-12)th step (S1323), when the round is the final round, the secondary input information including the (n)th computing code input statement information is generated.

In (2-11)th step (S1321), when the round of the (n)th accident scenario information is not the final round in the (2-10)th step (S1319), the round of the (n)th accident scenario information is added to enter the (2-3)th step (S1305).

Although the embodiments of the present disclosure have been described with reference to the accompanying drawings, it will be apparent to those skilled in the art that the present disclosure can be embodied in other specific forms without departing from the technical spirits and essential characteristics. Thus, the above embodiments are to be considered in all respects as illustrative and not restrictive.

## Claims

1. An automation method for accident analysis of a nuclear power plant, the automation method comprising:
loading primary input information including user input information and event tree information on accident scenario information for accident analysis in a primary input information generation module;
generating accident scenario information of the nuclear power plant based on the primary input information in an accident scenario information generation module;
generating secondary input information for accident analysis based on the accident scenario information in a secondary input information generation module; and
generating accident analysis information by performing accident analysis for the nuclear power plant based on the secondary input information in an accident analysis execution module.

2. The automation method of claim 1, further comprising generating result report information according to the accident analysis of the nuclear power plant based on the accident analysis information in a result report generation module.

3. The automation method of claim 1, wherein the accident scenario information includes at least 1,000 to 100,000 accident scenarios for each type.

4. The automation method of claim 1, wherein the accident scenario information generation module includes an element facility failure information generator generating first element facility failure information according to occurrence of a first element facility failure among element facilities of the nuclear power plant based on the primary input information, and second element facility failure information according to a second element facility failure among the element facilities of the nuclear power plant based on the primary input information.

5. The automation method of claim 4, wherein the element facility includes at least one of a pump, a valve, a pipe, an air conditioning device or an electric device of the nuclear power plant.

6. The automation method of claim 5, wherein the accident scenario information generation module further includes a safety system failure information generator generating safety system failure information on whether an operation of a safety system of the nuclear power plant corresponding to the element facility is failed, based on the element facility failure information.

7. The automation method of claim 6, wherein the safety system includes a first safety system in which the first element facility is included, and a second safety system in which the second element equipment is included, and
the safety system failure information includes first safety system failure information related to the first safety system, and second safety system failure information related to the second safety system.

8. The automation method of claim 6, wherein the secondary input information generation module generates accident analysis input information based on the safety system failure information, and the secondary input information is generated based on the accident analysis input information.

9. The automation method of claim 5, wherein the generating accident scenario information includes:
a (1-1)th step of generating history information indicating each accident scenario and including an initial event, first element facility failure information, second element facility failure information and (max)th element facility failure information through analysis of event tree information and determining safety system failure information to which each element facility failure information belongs;
a (1-3)th step of loading (n)th accident scenario information, which is accident scenario information of an (n)th round, among the accident scenario information;
a (1-4)th step of selecting (n)th history information from the history information based on the (n)th accident scenario information;
a (1-5)th step of obtaining (n)th safety system failure information from the safety system failure information in response to selected first history information;
a (1-6)th step of determining whether a round of the (n)th history information is a final round, in response to the (n)th safety system failure information;
a (1-7)th step of adding the round of the (n)th history information to enter the (1-5)th step when it is determined in the (1-6)th step that the round of the (n)th history information is not the final round; and
a (1-10)th step of generating the accident scenario information when the round is the final round.

10. The automation method of claim 9, further comprising a (1-9)th step of adding the round of the (n)th accident scenario information corresponding to the (n)th history information when it is determined in the (1-6)th step that the round of the (n)th history information is the final round.

11. The automation method of claim 9, further comprising a (1-7)th step of entering the (1-5)th step based on the added round of the (n)th history information when the round of the (n)th history information in the (1-6)th step is not the final round.

12. The automation method of claim 10, wherein the corresponding step enters the (1-3)th step when it is determined in the (1-9)th step that the round of the (n)th accident scenario information is not the final round.

13. The automation method of claim 9, further comprising:
a (1-1)th step of generating history information analysis information through analysis of the event tree information; and
a (1-2)th step of storing the analysis information through the analysis of the event tree information in a DB,
wherein the (n)th safety system failure information in the (1-5)th step is provided from the DB.

14. The automation method of claim 1, wherein the generating secondary input information includes:
a (2-1)th step of loading the scenario information;
a (2-3)th step of loading (n)th accident scenario information, which is accident scenario information of an (n)th round, among the accident scenario information;
a (2-4)th step of selecting (n)th history information from history information based on the (n)th accident scenario information;
a (2-5)th step of obtaining and loading (n)th computing code input information corresponding to the selected (n)th history information;
a (2-6)th step of determining whether a round of the (n)th history information in the (2-4)th step is a final round;
a (2-8)th step of generating user input variable reflection information based on the user input information and the (n)th computing code input information when it is determined in the (2-6)th step that the round of the (n)th history information is the final round;
a (2-9)th step of generating variable reflection (n)th computing code input statement information, which is a computing code input statement based on the (n)th accident scenario information, based on the user input variable reflection information;
a (2-10)th step of determining whether the round of the (n)th accident scenario information in the (2-9)th step is the final round; and
a (2-12)th step of generating the secondary input information including the (n)th computing code input statement information when the round is the final round.

15. The automation method of claim 14, further comprising a (2-11)th step of adding the round of the (n)th accident scenario information to enter the (2-3)th step when the round of the (n)th accident scenario information is not the final round in the (2-10)th step.

16. An automation system for accident analysis in a nuclear power plant, the automation system comprising:
a primary input generation module generating primary input information for accident analysis;
a scenario information generation module generating accident scenario information of the nuclear power plant based on the primary input information;
a secondary input information generation module generating secondary input information for accident analysis based on the accident scenario information; and
an accident analysis execution module generating accident analysis information by performing accident analysis for the nuclear power plant based on the secondary input information.
